## Europäisches Patentamt

## European Patent Office

## Office européen des brevets

(11) Veröffentlichungsnummer: **0 072 963**
**B1**

(12) **EUROPÄISCHE PATENTSCHRIFT**

(45) Veröffentlichungstag der Patentschrift:
12.03.86

(51) Int. Cl.⁴: **B 60 Q 1/26**

(21) Anmeldenummer: **82107200.6**

(22) Anmeldetag: **09.08.82**

(54) **Stand- und Parkbeleuchtung an Kraftfahrzeugen.**

(30) Priorität: **20.08.81 DE 3132967**

(43) Veröffentlichungstag der Anmeldung:
**02.03.83 Patentblatt 83/9**

(45) Bekanntmachung des Hinweises auf die Patenterteilung:
**12.03.86 Patentblatt 86/11**

(84) Benannte Vertragsstaaten:
**DE FR GB**

(56) Entgegenhaltungen:
**EP - A - 0 034 744**
**EP - A - 0 040 434**
**FR - A - 1 263 414**
**FR - A - 2 054 877**
**US - A - 4 215 390**

**AUTOMOTIVE ENGINEERING, Band 88, Nr. 4, April 1980,
Seiten 24-27, Dallas, USA
"Electroluminescent lighting applied to decorative trim"**

(73) Patentinhaber: **Siemens Aktiengesellschaft, Berlin und
München Wittelsbacherplatz 2, D-8000 München 2 (DE)**

(72) Erfinder: **Bauer, Wolfram, Prof. Dr., Unterlangenstadter
Strasse 13, D-8627 Redwitz (DE)**

## Beschreibung

Die Erfindung betrifft eine Stand- und Parkbeleuchtung an Kraftfahrzeugen mit einer Lichtquelle, die in einen transparenten Fluoreszenzfarbstoff enthaltenden Kunststoffkörper einstrahlt der mit einer Vorrichtung versehen ist, die das Licht in Richtung auf die Betrachtungsfläche reflektiert und das aus der Betrachtungsfläche austretende Licht auskoppelt.

Bei bisherigen Stand- und Parkbeleuchtungen an Kraftfahrzeugen wird das Licht von Glühlampen (10 Watt/Leuchte) durch eine Spiegelanordnung nach aussen gelenkt. Der Strom für den Betrieb der Lampen wird der Batterie entnommen. Auf eine geringe Leistungsaufnahme wird deshalb besonderen Wert gelegt.

Aus der US-A-4 215 390 ist eine Warnleuchte für Kraftfahrzeuge mit einer Lichtquelle und einer Linse aus einem transparenten Kunststoff mit eingearbeiteten fluoreszierendem Farbstoff oder Pigment bekannt.

Aufgabe der Erfindung ist es, Stand- und Parkbeleuchtungen an Kraftfahrzeugen mit einer geringeren Leistungsaufnahme bei möglichst gleicher Helligkeit zu realisieren. Es soll ferner auch eine gleichmässigere Ausleuchtung erreicht werden.

Die Aufgabe wird erfindungsgemäss gelöst mit einem transparenten Fluoreszenzfarbstoff enthaltenden zylindrischen oder quaderförmigen Kunststoffvollkörper, in welchen die Lichtquelle teilweise hineinragt und der bis auf die Betrachtungsfläche und die Auskopplungsfläche an allen Flächen mit einer reflektierenden Oberfläche versehen ist. Es kann auch über die Oberfläche des Fluoreszenzfarbstoff enthaltenden Kunststoffkörpers diffuses Licht eindringen.

Mit einer Ausführung gemäss der Erfindung, also unter Verwendung fluoreszierender Kunststoffe, lässt sich mit $1/5$ bis $1/2$ der Leistungsaufnahme die Helligkeit einer 10-Wattleuchte erreichen. Der Leistungsaufwand bei einer Ausführung gemäss der Erfindung ist somit wesentlich kleiner.

Ein für die Erfindung geeigneter Kunststoffkörper kann aus Polymethylmethacrylat oder Polykarbonat bestehen, in welchem Fluoreszenzfarbstoffe enthalten sind.

Gemäss einer bevorzugten Ausführung der Erfindung weist der Fluoreszenzfarbstoff enthaltende Kunststoffkörper auf der Gegenseite der Lichtaustrittsfläche Kerben auf.

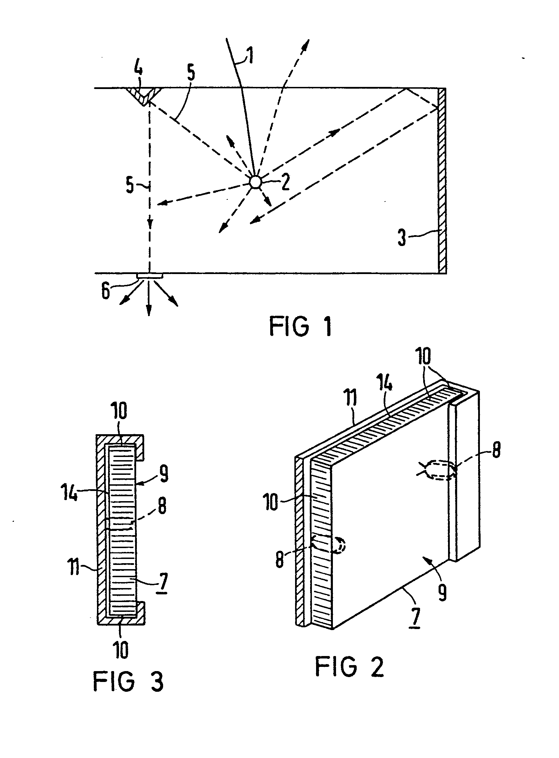

Das Funktionsprinzip von Fluoreszenzmitteln ist bekannt. Es ist in FIG 1 schematisch dargestellt, wobei mit 1 das Primärlicht, mit 2 das Fluoreszenzmittel, mit 3 eine Reflexionsschicht, mit 4 eine Kerbe bzw. ein Pigment und mit 6 das Lichtaustrittsfenster bezeichnet sind. Der Fluoreszenzlichtstrahl ist mit 5 bezeichnet.

Der Lichtaustritt an den Seitenflächen wird durch Totalreflexion oder Verspiegelung bzw. Lackierung verhindert.

In der Zeichnung ist der Erfindungsgegenstand zur besseren Erläuterung beispielsweise dargestellt. Es zeigt

FIG 2 ein Ausführungsbeispiel in einer perspektivischen Ansicht,

FIG 3 das Ausführungsbeispiel der FIG 2 im Schnitt.

Eine Ausführung gemäss den Figuren 2 und 3 besteht aus einer transparenten Leuchtplatte 7 aus Fluoreszenzfarbstoff enthaltenden Kunststoff, in welche 1,2 W Miniwattlampen 8 eingeführt sind. Die Leuchtplatte 7 hat an allen Flächen ausser der Betrachtungsfläche 9 eine Reflexionsschicht 10. Die der Betrachtungsfläche gegenüberliegende Fläche ist als Auskopplungsfläche 14 ausgebildet. Die einzelnen Bauteile sind durch ein Kunststoffgehäuse 11 fest miteinander verbunden.

## Patentansprüche

1. Stand- und Parkbeleuchtung an Kraftfahrzeugen mit einer Lichtquelle (8), die in einen transparenten Fluoreszenzfarbstoff enthaltenden Kunststoffkörper (7) einstrahlt der mit einer Vorrichtung (14) versehen ist, die das Licht in Richtung auf die Betrachtungsfläche reflektiert und das aus der Betrachtungsfläche austretende Licht auskoppelt, dadurch gekennzeichnet, dass ein transparenter Fluoreszenzfarbstoff enthaltender zylindrischer oder quaderförmiger Kunststoffvollkörper (7), in welchen die Lichtquelle (8) teilweise hineinragt, bis auf die Betrachtungsfläche (9) und die Auskopplungsfläche (14) an allen Flächen mit einer reflektierenden Oberfläche (10) versehen ist.

2. Stand- und Parkbeleuchtung nach Anspruch 1, dadurch gekennzeichnet, dass über die Oberfläche des Fluoreszenzfarbstoff enthaltenden Kunststoffkörpers (7) diffuses Licht eindringt.

3. Stand- und Parkbeleuchtung nach Anspruch 1 oder 2, dadurch gekennzeichnet, dass der Fluoreszenzfarbstoff enthaltende Kunststoffkörper (7) aus Fluoreszenzfarbstoff enthaltendem Polymethylmethacrylat besteht.

4. Stand- und Parkbeleuchtung nach Anspruch 1 oder 2, dadurch gekennzeichnet, dass der Fluoreszensfarbstoff enthaltende Kunststoffkörper (7) aus Fluoreszenzfarbstoff enthaltendem Polykarbonat besteht.

5. Stand- und Parkbeleuchtung nach Anspruch 1 bis 4, dadurch gekennzeichnet, dass der Fluoreszenzfarbstoff enthaltende Kunststoffkörper (7) auf der Gegenseite der Betrachtungsflächen (9) Kerben (4) aufweist.

6. Stand- und Parkbeleuchtung nach Anspruch 1 bis 4, dadurch gekennzeichnet, dass die Gegenfläche der Betrachtungsfläche (9) mit einem weiss pigmentierten Überzug versehen ist.

## Revendications

1. Feu de stationnement et de position installé sur des véhicules automobiles, comportant une cource de lumière (8), qui envoie son rayonnement dans un corps en matière plastique (7) contenant une substance colorée fluorescente transparente et qui est muni d'un dispositif (14) qui réfléchit la lumière en direction de la surface d'observation et qui extrait par découplage la lumière sortant de la surface d'observation, caractérisé par le fait qu'un corps plein en matière plastique (7) cylindrique ou parallélépipédique, qui contient une substance colorée fluorescente transparente et dans lequel la source de lumière (8) pénètre partiellement, est muni d'une surface réfléchissante (10) sur toutes ses surfaces, hormis au niveau de la surface d'observation (9) et de la surface (14) de sortie par découplage.

2. Feu de stationnement et de position suivant la revendication 1, caractérisé par le fait que la lumière diffuse pénètre par l'intermédiaire de la surface du corps en matière plastique (7) contenant la substance colorée fluorescente.

3. Feu de stationnement et de position suivant la revendication 1 ou 2, caractérisé par le fait que le corps en matière plastique (7) contenant la substance colorée fluorescente est constitué par du polyméthylmétacrylate contenant une substance colorée fluorescente.

4. Feu de stationnement et de position suivant la revendication 1 ou 2, caractérisé par le fait que le corps en matière plastique (7) contenant la substance colorée fluorescente est constitué par du polycarbonate contenant une substance colorée fluorescente.

5. Feu de stationnement et de position suivant les revendications 1 à 4, caractérisé par le fait que le corps en matière plastique (7) contenant la substance colorée fluorescente comporte des encoches (4) ménagées sur la face située à l'opposé de la surface d'observation (9).

6. Feu de stationnement et en position suivant les revendications 1 à 4, caractérisé par le fait que la surface, située à l'opposé de la surface d'observation (9), comporte un revêtement de couleur blanche.

**Claims**

1. A stationary and parking light for vehicles having a light source (8) which radiates into a transparent synthetic resin body (7) which contains a fluorescent dyestuff and which is provided with a device (17) which reflects the light in the direction of the viewing surface and which output-couples the light emerging from the viewing surface, characterised in that a transparent synthetic resin solid body (7) which is cylindrical or parallelepiped-shaped and contains a fluorescent dyestuff and into which the light source (8) partially protrudes, is provided with a reflecting surface (10) on all its faces with the exception of the viewing surface (9) and the output coupling surface (14).

2. A stationary and parking light as claimed in Claims 1, characterised in that diffuse light penetrates across the surface of the synthetic resin body (7) which contains the fluorescent dyestuff.

3. A stationary and parking light as claimed in Claim 1 or Claim 2, characterised in that the synthetic resin body (7) containing the fluorescent dyestuff consists of polymethyl methacrylate which contains fluorescent dyestuff.

4. A stationary and parking light as claimed in Claim 1 or Claim 2, characterised in that the synthetic resin body (7) containing the fluorescent dyestuff consists of polycarbonate which contains fluorescent dyestuff.

5. A stationary and parking light as claimed in Claim 1 to 4, characterised in that on the opposite side to the viewing surface (9), the synthetic resin body (7) containing fluorescent dyestuff has notches (4).

6. A stationary and parking light as claimed in Claim 1 to 4, characterised in that the opposite face of the viewing surface (9) is provided with a white-pigmented coating.

FIG 1

FIG 3

FIG 2

4